Europäisches Patentamt

European Patent Office

Office européen des brevets

(19)

(11) Publication number: **0 196 862 B1**

(12) # EUROPEAN PATENT SPECIFICATION

(45) Date of publication of patent specification: **11.09.91**

(51) Int. Cl.⁵: **H01J 29/22**, H01J 29/26, C09K 11/02

(21) Application number: **86302192.9**

(22) Date of filing: **25.03.86**

(54) **Cathode ray tubes.**

(30) Priority: **26.03.85 JP 61563/85**

(43) Date of publication of application:
**08.10.86 Bulletin  86/41**

(45) Publication of the grant of the patent:
**11.09.91 Bulletin  91/37**

(84) Designated Contracting States:
**DE FR GB**

(56) References cited:
**US-A- 4 242 371**

**PATENT ABSTRACTS OF JAPAN, vol. 6, no. 21 (E-93)[899], 6th February 1982; & JP-A-56 141 149 (TOKYO SHIBAURA DENKI K.K.) 04-11-1981**

(73) Proprietor: **SONY CORPORATION**
**7-35 Kitashinagawa 6-Chome Shinagawa-ku Tokyo 141(JP)**

(72) Inventor: **Tateyama, Norihiro Patents Division Sony Corporation 6-7-35 Kitashinagawa Shinagawa-ku Tokyo 141(JP)**
Inventor: **Yamazaki, Kazuo Patents Division Sony Corporation 6-7-35 Kitashinagawa Shinagawa-ku Tokyo 141(JP)**
Inventor: **Kato, Hiroshi Patents Division Sony Corporation 6-7-35 Kitashinagawa Shinagawa-ku Tokyo 141(JP)**
Inventor: **Teshima, Haruhito Patents Division Sony Corporation 6-7-35 Kitashinagawa Shinagawa-ku Tokyo 141(JP)**

(74) Representative: **Cotter, Ivan John et al D. YOUNG & CO. 10 Staple Inn London WC1V 7RD(GB)**

**Description**

This invention relates to cathode ray tubes and, more particularly, to fluorescent screens formed on inner surfaces of face plates of cathode ray tubes.

Several types of projectors have been suggested for enlarging and projecting an image of a cathode ray tube on a screen. The most common type of projector uses a so-called projection type display. The cathode ray tube for the projector is usually energised at a level of approximately fifteen to twenty times that of ordinary colour cathode ray tubes, thereby causing a fluorescent material of a screen of the tube to emit higher intensity light. With a small size projector tube, however, the power required may be so high that it is likely that the fluoresent material layer will separate from the face plate under the action of the electron beam energy applied.

In a typical previously proposed cathode ray tube structure, an outer surface of the tube constitutes a face plate and a fluorescent material layer is formed on the inner surface of the face plate. A metal backing layer is usually provided behind the fluorescent screen, and is formed by vacuum deposition. An intermediate layer, such as an acrylic resin, is usually interposed between the back of the fluorescent screen and the front of the metal backing layer. This type of fluorescent screen, as previously mentioned, has disadvantages when used as a projector of the type mentioned above.

JP-A-56/141 149 describes a cathode ray tube having a layer of $SiO_2$ between a fluorescent layer and a metal layer.

According to the present invention there is provided a cathode ray tube having a face plate, a fluorescent screen including fluorescent material formed on an inner surface of the face plate, and a metal backing layer on the fluorescent screen, wherein the fluorescent material includes fluorescent particles and the composition of the material is such that an amount of not less than 0.6 parts by weight of fluorescent particles is present in a portion of the material that contacts the face plate, the amount being insufficient to cause the brightness of the fluorescent particles to deteriorate, and not more than 0.3 parts by weight of $SiO_2$ per 100 parts by weight of fluorescent particles is present in a portion of the material that faces the metal backing layer.

A preferred form of cathode ray tube embodying the present invention and described hereinbelow has a fluorescent screen which substantially eliminates or at least alleviates the problem of separation on the face plate of the tube. Also, in the preferred cathode ray tube, the metal backing layer formed on the fluorescent screen is rendered free from deterioration due to moisture. The preferred cathode ray tube is particularly (but not exclusively) suitable for use in a colour projector requiring high electrical power.

The invention will now be further described, by way of illustrative and non-limiting example, with reference to the accompanying drawing, in which:

Figure 1 is a side elevational view, with portions broken away, of the overall structure of a cathode ray tube embodying the present invention;

Figure 2 is an enlarged cross-sectional view of an area indicated at A in Figure 1; and

Figure 3 is a cross-sectional view, similar to Figure 2, illustrating a fluorescent screen of a previously proposed cathode ray tube.

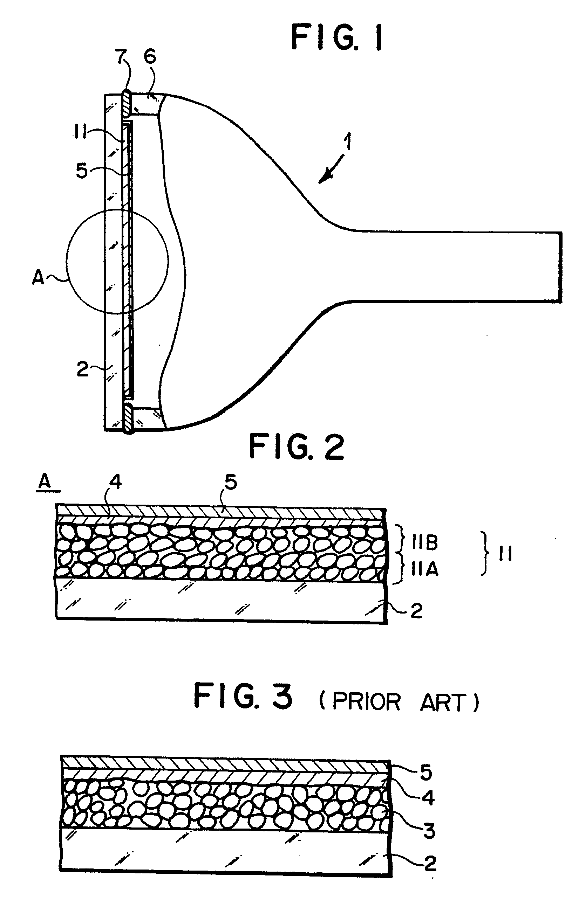

Figure 3 shows a fluorescent screen of a previously proposed cathode ray tube which comprises a face plate 2, a fluorescent material layer 3 formed on the inner surface of the face plate, and a metal backing layer 5 formed by vacuum deposition and located behind the fluorescent layer 3. An intermediate layer 4, which is composed for example of an acrylic resin, is interposed between the fluorescent material 3 and the metal backing layer 5. This type of fluorescent screen, as described above, does not function satisfactorily if used to project images under conditions of high power.

In an attempt to prevent the separation of the fluorescent material layer 3 from the face plate 2, the present inventors added $SiO_2$ powder to the fluorescent material layer 3. The addition of the $SiO_2$ powder caused the adhesion between the fluorescent material layer 3 and the face plate 2 to be improved. However, the fluorescent material layer 3 became too smooth on its surface, leading to a problem that the metal backing layer 5 (of aluminium) was more liable to separate. In addition, since $SiO_2$ powder has a high moisture absorption, the aluminium backing layer 5 was attacked, causing black-point defects.

In accordance with an embodiment of the present invention shown in Figures 1 and 2, a cathode ray tube 1 comprising a face plate 2 has a fluorescent screen 11 on the inner surface of the face plate 2. The fluorescent screen 11 is covered with a metal backing layer 5, which may for example be composed of aluminium. The face plate 2 is bonded to a funnel-shaped portion 6 of the tube 1 around the periphery of the face plate 2 by a frit sealer 7.

In this embodiment of the present invention, the fluorescent screen 11 is in the form of a layer whose characteristics on opposite sides differ from one another. A first side 11A of the screen 11, which side contacts the face plate 2, includes not less than 0.6 parts by weight of $SiO_2$ per 100 parts by weight of fluorescent particles in the screen 11. The second side 11B, which side faces the metal backing layer 5, is free of $SiO_2$ or includes not more than 0.3 parts by weight of $SiO_2$ per 100 parts by weight of the fluorescent particles. The upper limit of the $SiO_2$ content at the first side 11A, which contacts the face plate 2, is such that the brightness of the fluorescent screen 11 is not deteriorated by the addition of the $SiO_2$. The second side 11B may be formed with the metal backing layer 5 with an intermediate layer 4, such as a conventional acrylic resin layer as shown in Figure 2, disposed therebetween.

Since the fluorescent screen 11 contains $SiO_2$ in an amount of not less than 0.6 parts by weight at the side 11A contacting the face plate 2, good adhesion to the face plate 2 is ensured. On the other hand, the other side 11B of the fluorescent screen 11 facing the metal backing layer 5 is free of $SiO_2$ or has an $SiO_2$ content not greater than 0.3 parts by weight per 100 parts of the fluorescent particles so that the surface has suitable irregularities and the adhesion between the metal backing layer 5 and the fluorescent screen 11 is high. At the same time, the second side 11B has a smaller amount of $SiO_2$ and thus has a reduced moisture absorption so that the metal backing layer 5 is not undesirably attacked.

The fabrication of the fluorescent screen 11 can be accomplished as follows. First, a fluorescent paste which contains not less than 0.6 parts by weight of $SiO_2$ per 100 parts of a fluorescent material is made up. The paste includes fluorescent material particles, a binder, and $SiO_2$ powder dispersed in a solvent. The fluorescent material may be any of the materials ordinarily used for these purposes, typical of which are the following:

$$Y_3Al_2Ga_3O_{12}\text{:Tb} \qquad \text{(green)}$$
$$ZnS\text{:Ag} \qquad \text{(blue)}$$
$$Y_2O_3\text{:Eu} \qquad \text{(red).}$$

The binder may be a cellulose derivative such as ethyl cellulose, nitrocellulose, or the like, or a synthetic resin such as polyvinyl alcohol, as is well known in the art. The $SiO_2$ is in the form of a fine powder such as the type commercially available under the designation "Aerosil-200" from Nippon Aerosil Co. Ltd. This powder has a particle size range of 8 to 40 nm.

The fluorescent paste is prepared by mixing the above ingredients in a suitable mixer such as a ball mill. The paste is printed onto the inner surface of the face plate 2 to a thickness of 20 to 30 $\mu$m dried, and cooled to form the first layer 11A.

Subsequently, another fluorescent paste, which can be substantially the same as that described above except that the $SiO_2$ content is not greater than 0.3 parts by weight per 100 parts by weight of the fluorescent material, is made up. This paste is printed on the previously deposited layer or sub-layer 11A to form another layer 11B.

Similarly, an intermediate layer 4 is usually formed on the layer 11B by printing a solution of, for example, an acrylic resin, followed by drying, and a metal such as aluminium or the like is vacuum deposited to form the metal backing layer 5. The face plate 2 is then subjected to baking and bonded to the funnel-shaped portion 6 by the frit sealer 7 to obtain the cathode ray tube 1.

In the above procedure, the fluorescent screen is formed by a printing technique, but it also may be formed by a slurry method as described hereinbelow.

The following examples illustrate the manufacture of a cathode ray tube embodying the present invention.

EXAMPLE 1

Fluorescent material pastes of the formulations indicated below, comprising $SiO_2$ powder ("Aerosil-200"), were made up and were printed on the inner surface of a glass face plate of a cathode ray tube, dried and cooled to form a fluorescent material layer. The fluorescent paste compositions comprised the following ingredients:

3

| Fluorescent material | 100 g |
| Ethyl cellulose | 2.5 g |
| Butyl carbitol | 30 g |
| "Aerosil-200" | suitable amounts (including zero). |

The composition of the "Aerosil-200" was as follows:

| $SiO_2$ | : | greater than 99.8% |
| $Al_2O_3$ | : | greater than 0.05% |
| $TiO_2$ | : | greater than 0.03% |
| HCl | : | greater than 0.01%. |

An intermediate layer of an acrylic resin was printed on the fluorescent material layer and dried, followed by vacuum deposition of the metal backing layer of aluminium. Thereafter, the face plate was baked and bonded to a funnel-shaped portion of the tube by a frit sealer to obtain the cathode ray tube.

The tubes, in which the content of $SiO_2$ powder in the fluorescent layer was varied, were tested by application of an electrical power of 5 $W/cm^2$. The separation of the fluorescent screen, that is the separation of the fluorescent material layer from the face plate, and the separation of the aluminium backing layer from the fluorescent material layer, were observed. The results are shown in the following table:

TABLE

| Amount of $SiO_2$ (based on 100 parts by weight of fluorescent material) | 0 parts by wt. | 0.3 parts by wt. | 0.6 parts by wt. | 1.2 parts by wt. | 5.0 parts by wt. |
| --- | --- | --- | --- | --- | --- |
| Percentage separation of the fluorescent material layer | 45% | 25% | 0% | 0% | 0% |
| Separation of the Al backing layer | no | no | yes | yes | yes |

As is apparent from the above table, when the fluorescent material layer contained not less than 0.6 parts by weight of the $SiO_2$ powder, separation of the fluorescent material layer from the face plate did not occur. When the fluorescent material layer contained not more than 0.3 parts by weight (including none) of the $SiO_2$ powder, separation of the aluminium backing layer from the fluorescent material layer did not take place. It should also be recognised that the aluminium backing layer was not oxidised.

Thus, the fluorescent layer should have not less than 0.6 parts by weight of the $SiO_2$ powder per 100

parts by weight of the fluorescent material on the side which contacts the face plate, up to an upper limit which is an amount not sufficient to cause the brightness of the fluorescent material layer to deteriorate, for example 3 parts by weight. On the other hand, the opposite side should be free of the $SiO_2$ powder or should contain not more than 0.3 parts by weight of the $SiO_2$ powder per 100 parts by weight of the fluorescent material.

EXAMPLE 2

This example illustrates manufacture of the fluorescent screen by a printing technique.

A fluorescent paste containing $SiO_2$ powder and of the formulation indicated below was printed on the inner surface of the face plate 2 of a cathode ray tube, following by drying and cooling to form the first layer 11A shown in Figures 1 and 2. The formulation was:

| | |
|---|---|
| Fluorescent material | 100 g |
| Ethyl cellulose | 2.5 g |
| Butyl carbitol | 30 g |
| "Aerosil-200" | 0.6 g or more. |

Subsequently, a fluorescent paste free of $SiO_2$ was made up and printed over the first fluorescent layer 11A followed by drying and cooling to form the second layer 11B, thereby providing a double-layer structure. The composition of the fluorescent paste for the second layer was as follows:

| | |
|---|---|
| Fluorescent material | 100 g |
| Ethyl cellulose | 2.5 g |
| Butyl carbitol | 30 g. |

An intermediate layer 4 was printed on the fluorescent screen and dried, after which an aluminium backing layer 5 was vacuum deposited on the intermediate layer 4. After a baking treatment, the face plate 2 was bonded to the funnel-shaped portion 6 by the frit sealer 7 to provide a cathode ray tube 1.

With the above arrangement, the first layer 11A contacting the face plate 2 contained $SiO_2$ and thus ensured good adhesion to the face plate 2. The second layer 11B facing the metal backing layer 5 did not contain $SiO_2$ and thus had appropriate irregularities which ensured good adhesion to the metal backing layer. The second layer 11B had a very small moisture absorption characteristic such that, when high electric power was applied to the cathode ray tube, the fluorescent screen 11 did not separate from the face plate 2 and the metal backing layer 5 was not attacked.

EXAMPLE 3

This example illustrates the formation of the fluorescent screen by a slurry method.

In this method, a fluorescent paste containing $SiO_2$ powder in the formulation indicated below was applied onto the surface of the face plate 2, dried, exposed to light according to a predetermined pattern, and developed to form the first layer 11A. The composition for the slurry was:

| Fluorescent material | 100 g |
| Polyvinyl alcohol (PVA) | 5 g |
| Ammonium dichromate (ADC) | 0.5 g |
| "Aerosil-200" | 0.6 g or more |
| Water | 100 cm$^3$. |

Subsequently, another fluorescent slurry having a formulation free of $SiO_2$ was applied onto the first layer 11A, dried, exposed to light with a desired pattern and developed to form the second layer 11B. The composition of the second layer was:

| Fluorescent material | 100 g |
| Polyvinyl alcohol (PVA) | 5 g |
| Ammonium dichromate (ADC) | 0.5 g |
| Water | 100 cm$^3$. |

An aluminium backing layer 5 was formed on the fluorescent screen 11 with the intermediate layer 4 of an acrylic resin disposed therebetween. Thereafter, the face plate was baked and frit sealed to a funnel-shaped portion to provide the finished cathode ray tube. The fluorescent screen of the cathode ray tube had substantially the same characteristics as obtained in Example 2.

The fluorescent screen 11 has been described in the above examples as having two discrete layers, but any layer arrangement including one layer or a plurality of layers may be used provided that the $SiO_2$ contents at the side contacting the face plate 2 and the side facing the metal backing layer 5 have the values as described previously.

## Claims

1. A cathode ray tube (1) having a face plate (2), a fluorescent screen (11) including fluorescent material formed on an inner surface of the face plate (2), and a metal backing layer (5) on the fluorescent screen (11), wherein the fluorescent material includes fluorescent particles and $SiO_2$, characterised in that the composition of the material is such that an amount of not less than 0.6 parts by weight of $SiO_2$ per 100 parts by weight of fluorescent particles is present in a portion of the material that contacts the face plate (2), the amount being insufficient to cause the brightness of the fluorescent particles to deteriorate, and not more than 0.3 parts by weight of $SiO_2$ per 100 parts by weight of fluorescent particles is present in a portion of the material that faces the metal backing layer (5).

2. A cathode ray tube according to claim 1, wherein the portion of the fluorescent material that faces the metal backing layer is substantially free of $SiO_2$.

3. A cathode ray tube according to claim 1, wherein the fluorescent material appears in two discrete layers, namely a front layer (11A) contacting the inner surface of the face plate (2) and containing $SiO_2$ in an amount not less than 0.6 parts by weight per 100 parts by weight of fluorescent particles, and a second layer (11B) immediately adjacent the first layer (11A) and containing not more than 0.3 parts by weight $SiO_2$ per 100 parts by weight of fluorescent particles.

4. A cathode ray tube according to claim 3, wherein the second layer (11B) is substantially free of $SiO_2$.

5. A cathode ray tube according to any one of the preceding claims, which includes an intermediate layer (4) of an acrylic resin interposed between the metal backing layer (5) and the portion of the fluorescent material that faces the metal backing layer.

EP 0 196 862 B1

**Revendications**

1. Tube à rayons cathodiques (1) comportant une plaque frontale (2), un écran fluorescent (11) comprenant une matière flurescente, formé sur la surface interne de la plaque frontale (2) et une couche métallique dorsale (5) sur l'écran fluorescent (11), dans lequel la matière fluorescente comprend des particules fluorescentes et $SiO_2$, caractérisé en ce que la composition de la matière est telle qu'une quantité d'au moins 0,6 partie en poids de $SiO_2$ pour 100 parties en poids de particules fluorescentes est présente dans une partie de la matière qui est en contact avec la plaque frontale (2), cette quantité étant insuffisante pour provoquer une détérioration de la brillance des particules fluorescentes, et qu'une quantité d'au plus 0,3 partie en poids de $SiO_2$ pour 100 parties en poids de particules fluorescentes est présente dans une partie de la matière qui fait face à la couche métallique dorsale (5).

2. Tube à rayons cathodiques selon la revendication 1, dans lequel la partie de la matière fluorescente qui fait face à la couche métallique dorsale est sensiblement exempte de $SiO_2$.

3. Tube à rayons cathodiques selon la revendication 1, dans lequel la matière fluorescente est présente dans deux couches distinctes, a savoir une couche frontale (11A) qui est en contact avec la surface interne de la plaque frontale (2) et qui contient $SiO_2$ en une quantité d'au moins 0,6 partie en poids pour 100 parties en poids de particules fluorescentes, et une seconde couche (11B) immédiatement adjacente à la première couche (11A) et contenant au plus 0,3 partie en poids de $SiO_2$ pour 100 parties en poids de particules fluorescentes.

4. Tube à rayons cathodiques selon la revendication 3, dans lequel la seconde couche (11B) est sensiblement exempte de $SiO_2$.

5. Tube à rayons cathodiques selon l'une quelconque des revendications précédentes , qui comprend une couche intermédiaire (4) de résine acrylique disposée entre la couche métallique dorsale (5) et la partie de la matière fluorescente qui fait face à la couche métallique dorsale.

**Patentansprüche**

1. Kathodenstrahlröhre (1) mit einer Frontplatte (2), einem Leuchtschirm (11) mit einem auf der Innenseite der Frontplatte (2) ausgebildeten Leuchtmaterial sowie mit einer metallischen Belagschicht (5) auf dem Leuchtschirm (11), wobei das Leuchtmaterial leuchtende Teilchen und $SiO_2$ enthält,
dadurch **gekennzeichnet,**
daß die Materialzusammensetzung derart ist, daß ein Gehalt von nicht weniger als 0,6 Gew.-Teile an $SiO_2$ je 100 Gew.-Teilen der leuchtenden Teilchen in dem mit der Frontplatte (2) in Berührung stehenden Materialabschnitt vorhanden ist, jedoch der Gehalt nicht ausreicht zur Verschlechterung des Glanzes der leuchtenden Teilchen und daß nicht mehr als 0,3 Gew.-Teile an $SiO_2$ je 100 Gew.-Teilen der leuchtenden Teilchen in dem mit der metallischen Belagschicht (5) in Berührung stehenden Materialabschnitt vorliegen.

2. Kathodenstrahlröhre gemäß Anspruch 1, worin der Abschnitt des Leuchtmaterials, der mit der metallischen Belagschicht in Berührung steht, im wesentlichen frei von $SiO_2$ ist.

3. Kathodenstrahlröhre gemäß Anspruch 1, worin das Leuchtmaterial in zwei getrennten Schichten vorkommt, nämlich einer Frontschicht (11A), die mit der Innenseite der Frontplatte (2) in Berührung steht und $SiO_2$ in einer Menge von nicht weniger als 0,6 Gew.-Teile je 100 Gew.-Teile der leuchtenden Teilchen enthält sowie einer zweiten Schicht (11B), die der ersten Schicht (11A) unmittelbar benachbart ist und nicht mehr als 0,3 Gew.-Teile an $SiO_2$ je 100 Gew.-Teile der leuchtenden Teilchen enthält.

4. Kathodenstrahlröhre gemäß Anspruch 3, worin die zweite Schicht (11B) im wesentlichen frei an $SiO_2$ ist.

5. Kathodenstrahlröhre gemäß irgendeinem der vorangehenden Ansprüche, wobei eine Zwischenschicht (4) aus einem Acrylharz zwischen der metallischen Belagschicht (5) und dem mit der metallischen Belagschicht in Berührung stehenden Abschnitt des Leuchtmaterials vorhanden ist.

7

# FIG. 1

# FIG. 2

# FIG. 3 (PRIOR ART)